# EUROPEAN PATENT APPLICATION

(11) **EP 3 260 356 A2**
(43) Date of publication of application: **27.12.2017**
(21) Application number: 17172576.5
(22) Date of filing: 23.05.2017
(51) Int. Cl.: B62D 6/10, B62D 5/00, G01L 5/22, B62D 15/02

(54) **STEERING INPUT SENSOR FOR A STEER-BY-WIRE ASSEMBLY**

(30) Priority: 20.06.2016 US 201615187198
(71) Applicant: Dura Operating, LLC, Auburn Hills, MI 48326 (US)
(72) Inventor: LEWIS, Joseph W., Rochester Hills, MI 48309 (US); CHEN, Yuchen, Yanta Qu, Xi'an City, Shaanxi 710068 (CN); LEVESQUE, Steven P., Rochester Hills, MI 48307 (US); HOWE, Brian D., Shelby Township, MI 48315 (US)
(74) Representative: Albrecht, Ralf

(57) **Abstract**

A steer-by-wire assembly for a steering system in a vehicle is disclosed. The assembly includes a first shaft rotatable in response to a steering input, a second shaft adapted to rotate in response to rotation of the first shaft, a first gear (with a sensed element) that rotates in response to rotation of the first shaft, a second gear (with a sensed element) that rotates in response to rotation of the second shaft, a first sensing element adapted to sense the element carried by the first gear and provide an output associated with an angular position of the first gear, and a second sensing element adapted to sense the element carried by the second gear and provide an output associated with an angular position of the second gear. When the second shaft rotates relative to the first shaft, the outputs provide position and torque data associated with the steering input.

## Description

### Technical Field

The present disclosure relates to a steering input sensor for a steer-by-wire assembly.

### Background

Conventional vehicle steering systems utilize a mechanical steering linkage between a vehicle steering wheel and the road wheels. Thus, when a driver actuates the steering wheel, the mechanical linkage moves in a corresponding manner and the wheels are turned. Since steer-by-wire systems utilize different components than mechanical systems, there is a need to, among other things, provide a mechanism to accept steering input, and based on that steering input, determine how much and with what force to turn the wheels.

### Summary

In at least some implementations, a steer-by-wire assembly for a steering system in a vehicle includes a first shaft, a second shaft, a first gear, a second gear, a first sensing element, and a second sensing element. The first shaft is rotatable in response to a steering input, and the second shaft is adapted to rotate in response to rotation of the first shaft. The first gear may rotate in response to rotation of the first shaft, and the second gear may rotate in response to rotation of the second shaft, wherein each of the first and second gears carry a sensed element. The first sensing element may be adapted to sense the element carried by the first gear and provide an output associated with an angular position of the first gear, and the second sensing element may be adapted to sense the element carried by the second gear and provide an output associated with an angular position of the second gear. And when the second shaft rotates relative to the first shaft, the outputs provide position and torque data associated with the steering input.

In at least some implementations, a method of determining steering input position data and torque data for a vehicle steering system is provided. The method includes: receiving a first electrical output from a first sensing element that detects rotation of a first shaft using a first gear ratio, wherein the first shaft is coupled to a second shaft via a torsion bar; receiving a second electrical output from a second sensing element that detects rotation of the second shaft using a second gear ratio that is different than the first gear ratio; and using the first and second gear ratios, determining steering input position data and steering input torque data based on the first and second electrical outputs.

Other embodiments can be derived from combinations of the above and those from the embodiments shown in the drawings and the descriptions that follow.

### Brief Description of the Drawings

The following detailed description of preferred implementations and best mode will be set forth with regard to the accompanying drawings, in which:
FIG. 1A illustrates a steer-by-wire system that includes a steer-by-wire assembly, shown in perspective, and a schematic diagram of the remainder of the system;
FIG. 1B is another perspective view of the steer-by-wire assembly;
FIG. 2 is a partial sectional view of the steer-by-wire assembly shown in FIGS. 1A-1B;
FIG. 3 is an exploded view of a shaft and shaft components of the steer-by-wire assembly;
FIG. 4 is a partial sectional view of the assembled shaft and shaft components;
FIGS. 5A-5B are perspective views of end portions of a first shaft component and a second shaft component, respectively;
FIG. 6 is a perspective view of a steering input sensor, wherein the shaft and housing are shown in section;
FIG. 7 is an enlarged view of the steering input sensor shown in FIG. 2;
FIG. 8 is a partial perspective view of the steering input sensor without the housing-illustrating a secondary gear partially in section;
FIG. 9 is an exploded view of the steering input sensor, wherein the shaft and shaft components are hidden;
FIG. 10 is an exploded perspective view of part of a motorized feedback assembly;
FIG. 11 is a sectional perspective view of part of the feedback assembly;
FIG. 12 is a sectional view of part of the steer-by-wire assembly, wherein a portion of the assembly is cut away to illustrate the motorized feedback system;
FIGS. 13-15 are graphical depictions of Hall sensor data associated with an exemplary angular steering input range; and
FIG. 16 is a flow diagram illustrating a method of determining steering position data and steering torque data.

### Detailed Description

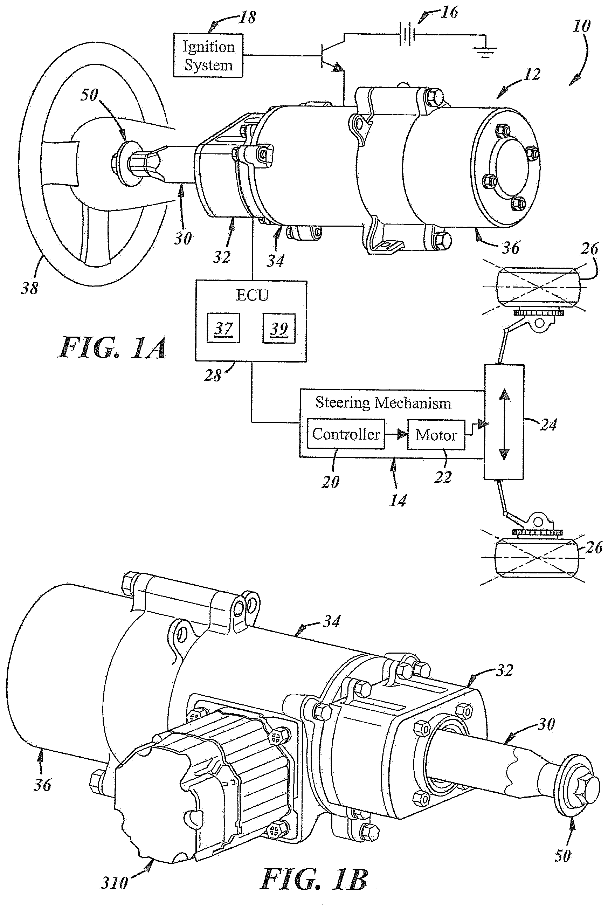

Referring in more detail to the drawings, FIG. 1A illustrates one embodiment of a vehicle steer-by-wire system 10 that includes a steer-by-wire assembly 12 electrically coupled to a vehicle steering mechanism 14 and a vehicle ignition system 18. The ignition system 18 may include any suitable components to control the delivery of electrical power 16 to the steer-by-wire assembly 12. And the steering mechanism 14 may include a controller 20, an electric motor 22, and a gearing system 24 used to actuate or turn the wheels 26 of a vehicle. For example, the controller 20 may receive steering control signals from the steer-by-wire assembly 12, control the electric motor 22 using those control signals, and the electric motor 22 then may actuate the gear system 24 to turn the wheels 26. For example, controlling the electric motor 22 to operate in a first direction (e.g., clockwise) may cause the gear assembly 24 to drive the wheels 26 rightward, while controlling the electric motor 22 to operate in an opposing direction (e.g., counter-clockwise) may cause the gear assembly 24 to drive the wheels 26 leftward. System 10 shown in FIG. 1A is merely illustrative, and other implementations are possible.

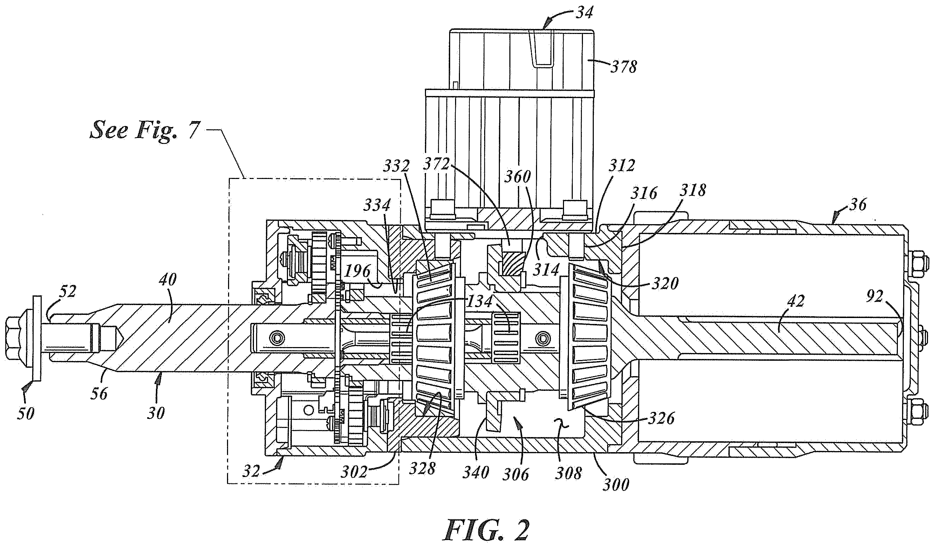

In at least one embodiment, the steer-by-wire assembly 12 includes a two-piece shaft or shaft assembly 30, a position and torque sensing unit or steering input sensor 32, a motorized feedback assembly 34, and a clutch assembly 36 (see also FIGS. 1B and 2). The steering input sensor 32 may be adapted to provide electrical output values associated with mechanical steering input, and, using an electronic control unit (ECU) 28, also may correlate the output values to position and torque steering data. Thereafter, ECU 28 may command or otherwise send the position and torque steering data to the steering mechanism 14 which may control the vehicle wheels 26. While sensor 32 receives mechanical steering input, the feedback assembly 34 may provide so-called 'road-feel'-e.g., a rotational assistance/resistance profile experienced by the driver which typically is associated with turning a steering wheel having a mechanical linkage between the steering wheel and wheels (e.g., in a non-steer-by-wire system). The clutch assembly 36 can be adapted to provide, among other things, end stops or rotational limits for the shaft 30 and/or steering wheel 38. In at least one embodiment, the shaft 30 at least partially passes through assemblies 32, 34, 36 and/or components thereof, as will be discussed in greater detail below.

The ECU 38 may include a processor or processing unit 37 and memory 39 storing instructions which are executable by the processor 37 to carry out at least a portion of the method described herein. The processor 37 can be any type of device capable of processing electronic and/or digitally-stored instructions and may include microprocessors, microcontrollers, controllers, application specific integrated circuits (ASICs), and the like. Processor 37 may be a dedicated processor used only for ECU 38, or it can be shared with other systems.

The memory 39 may be coupled to processor 37 and may include any non-transitory computer usable or readable medium, which includes one or more storage devices or articles. Exemplary non-transitory computer usable storage devices include conventional computer system RAM (random access memory), ROM (read only memory), EPROM (erasable, programmable ROM), EEPROM (electrically erasable, programmable ROM), and the like. In at least one embodiment, memory 39 stores digital instructions executable by processor 37. For example, processor 37 may be specially adapted to determine both shaft position and torque based on two sensor measurements, as will be described more below.

It should be appreciated that while the ECU 38 is shown mechanically spaced (e.g., remotely located) from the steering input sensor 32 and the steering mechanism 14, this is not required. For example, in some embodiments, the ECU 28 may be mounted on or at least partially within the steer-by-wire assembly 12. Regardless of the physical location of the ECU 28, the ECU may be coupled electrically to both the steering input sensor 32 and the steering mechanism 14 (e.g., the controller 20 and/or the motor 22). And in some embodiments, the ECU 28 may be used in lieu of controller 20 and/or be located in steering mechanism 14.

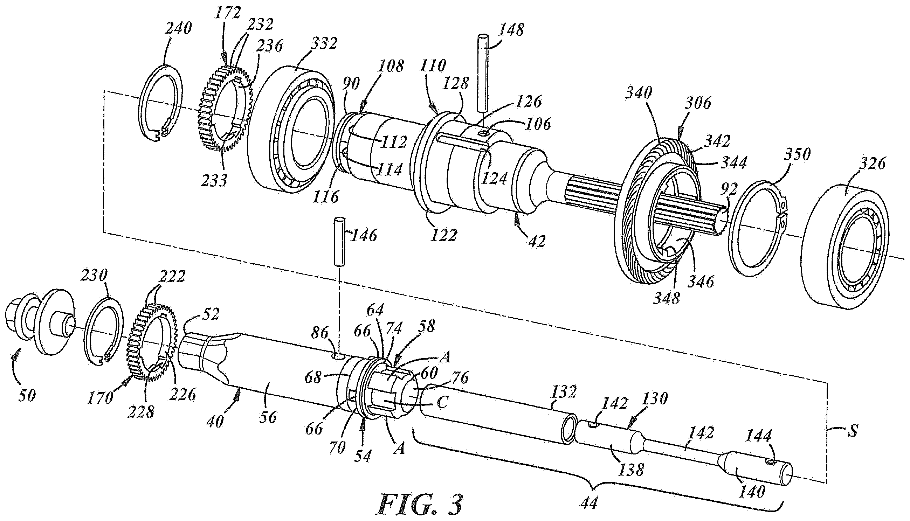

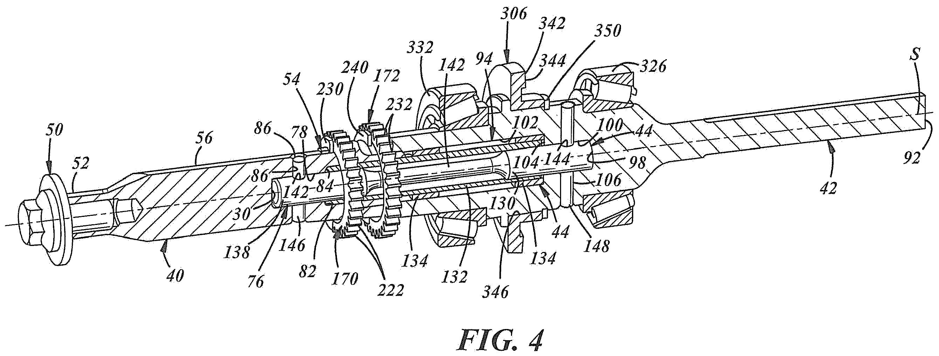

FIGS. 3, 4, and 5A-5B illustrate the two-piece shaft assembly 30 in greater detail. For example, the shaft assembly 30 includes a first or upper shaft 40, a second or lower shaft 42 coupled to the upper shaft 40, and a torsion assembly 44 coupled to both the upper and lower shafts 40, 42. FIGS. 3 and 4 illustrate the shaft assembly 30 having a number of shaft components coaxially arranged on an axis of rotation S, as will be described below.

The upper shaft 40 includes steering wheel coupling features 50 at a first end 52, gear retaining features 54 on an outer surface 56 thereof, and coupling features 58 at or near a second end 60 for coupling the upper and lower shafts 40, 42 together. The steering wheel coupling features 50 may be any suitable element(s) adapted to retain the steering wheel 38 (shown in FIG. 1A); the illustrated features are merely examples.

As best shown in FIG. 3, gear retaining features 54 include any suitable features adapted to coaxially position and retain a gear of the input sensor 32 with respect to upper shaft 40. Features 54 may be located between the first and second ends 52, 60 and may include a flange 64 that axially and radially extends with respect to shaft 40, a number of circumferentially spaced tabs 66, and a circumferential channel 68 around the shaft 40. The flange 64 may have a shoulder 70 that faces the first end 52, and the tabs 66 may extend axially and radially from the shaft 40 between the shoulder 70 and the first end 52. And channel 68 may be adjacent to the tabs 66 and may be adapted to receive a retaining clip, as will be described later. Of course, these shaft features shown are merely examples; in other implementations, the gear retaining features 54 may differ.

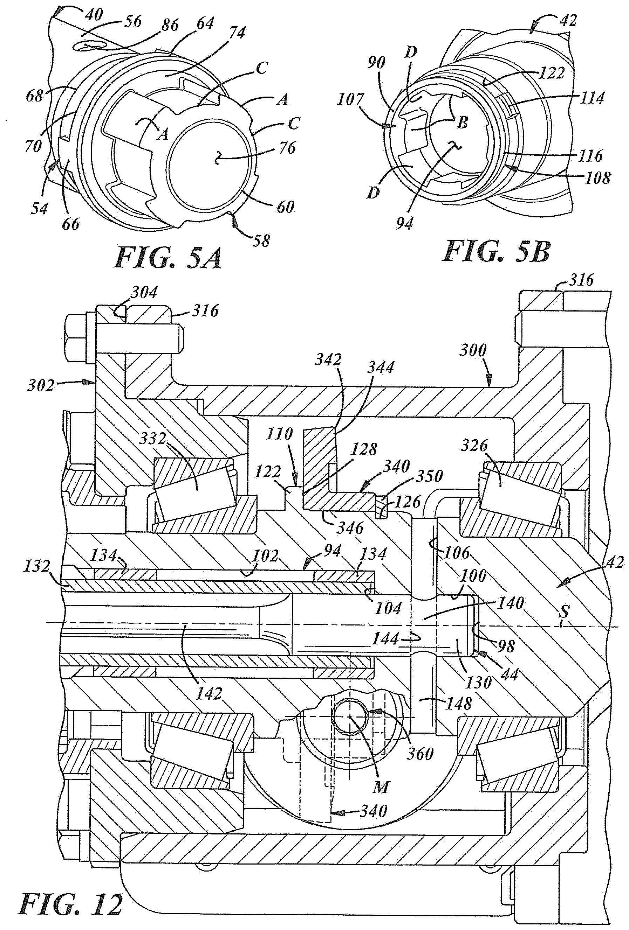

As shown in FIGS. 3 and 5A, the coupling features 58 shown at the second end 60 may include a second shoulder 74 of flange 64 that faces the second end 60, a number of radially outwardly extending and circumferentially spaced keys A, and a number of circumferentially spaced keyways C which are interstitially-located with respect to keys A. The keys A and keyways C may be located between the shoulder 74 and the second end 60.

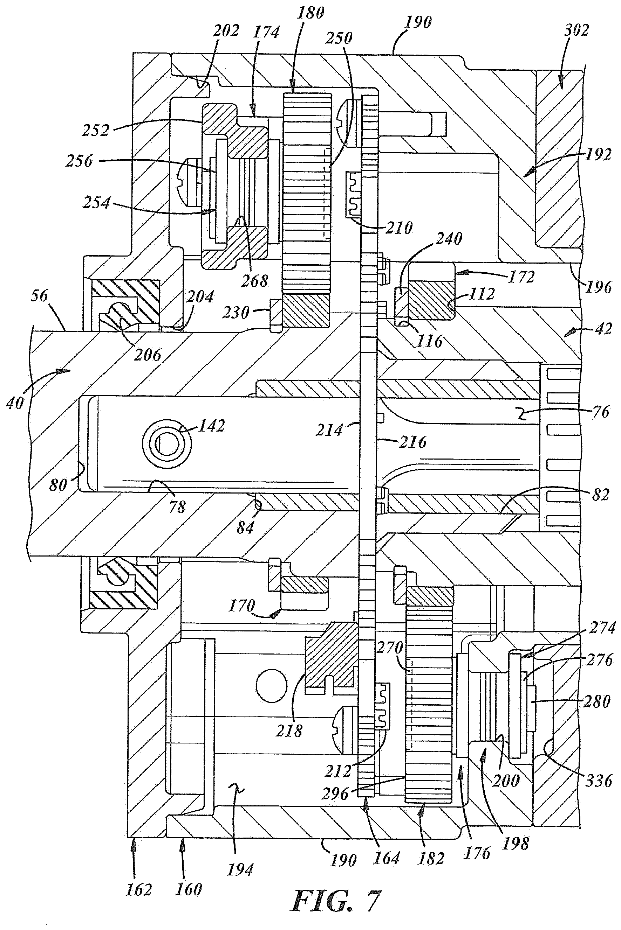

As best shown in FIGS. 4 and 7, the upper shaft 40 also may include a cavity 76 which may be defined at least in part by a bore 78 extending from a base 80 and a counterbore 82 extending from the bore 78 to the second end 60 with an annular flange 84 between the bore 78 and counterbore 82. A cross passage 86 (FIGS. 3-4) may extend into or through the shaft 40 and may intersect the cavity 76 and the axis *S* in the bore 78.

Turning now to the lower shaft 42 (FIGS. 3, 4, and 12), it has a first end 90 coupled to the upper shaft 40 and a second end 92 associated with and acted upon by the clutch assembly 36. To receive part of the torsion assembly 44, the first end 90 includes a cavity 94 that may be coaxially aligned with the cavity 76 in the upper shaft 40, and oppositely facing so that, when the upper and lower shafts 40, 42 are coupled together, the cavities 76, 94 are aligned and define an enclosure for the torsion assembly 44. In more detail, the cavity 94 in the lower shaft 42 extends from the first end 90 to a base 98 (see FIGS. 4 and 12), and may be defined at least in part by a bore 100 extending from the base 98 and a counterbore 102 that extends from the bore 100 to the first end 90-having an annular flange 104 between the bore 100 and counterbore 102. A cross passage 106 may intersect the cavity 94 and may extend into or through the shaft 42 in the area of the bore 100. To facilitate coupling the upper and lower shafts 40, 42 together, the cavity 94 in the lower shaft 42 may be sized and configured to receive the second end 60 of the upper shaft 40, as set forth in more detail below.

In the example shown in FIG. 5B, the first end 90 of the lower shaft 42 includes coupling features 107 which correspond to features 58. In the illustration, features 107 include radially inwardly extending keys B and interstitially-located keyways D adapted to mate with keys A and keyways C of the upper shaft 40 to rotationally couple the shafts 40, 42 together. The keyways C, D may be circumferentially wider than the keys A, B to permit limited rotation between the shafts 40, 42 (e.g., 2 to 3 degrees) before keys A, B of each shaft 40, 42 become engaged preventing further relative rotation between the shafts 40, 42 in that direction. Of course, other arrangements may be provided to couple the shafts 40, 42 and permit at least some relative rotation between them.

As shown in FIG. 3, the lower shaft 42 may have two sets of gear retaining features 108, 110 two retain two different gears between the first and second ends 90, 92 thereof. With respect to features 108, they may be located proximate to the first end 90 of the shaft 42, and features 108 may include a flange 112 that extends radially outwardly with respect to shaft 42 and faces end 90, a number of circumferentially spaced tabs 114 that extend axially and radially outwardly with respect to the shaft 42 between the flange 112 and the first end 90, and a circumferential channel 116 around the shaft 42 adjacent the tabs 114 (e.g., adapted to receive a retaining clip). Of course, the gear retaining features 108 shown are merely examples; in other implementations, these features may be different.

With respect to gear retaining features 110, they may be adapted to coaxially position and retain a gear of the feedback assembly 34 with respect to the lower shaft 42, as will be explained more below. Features 110 may be located between the gear retaining features 108 and the second end 92 and may include a flange 122 that extends axially and radially outwardly with respect to the shaft 42, a number of circumferentially spaced and axially extending grooves 124 in the shaft 42, and a circumferential channel 126 around the shaft 42. The flange 122 may have a shoulder 128 that faces the second end 92, and the grooves 124 may extend from the shoulder 128 toward the second end 92. Further, the channel 126 may be spaced from the shoulder 128, may intersect the grooves 124, and may be adapted to receive a gear retaining clip. Of course, the features 110 shown are merely examples; in other implementations, these features 110 may differ as well.

The lower shaft 42 may have other features that are adapted to couple or interact with other steer-by-wire components. For example, the shaft 42 may have axially extending splines between the gear retaining features 110 and the second end 92. However, this is merely one example; and other features may be present as well.

Turning now to the torsion assembly 44 carried within the cavities 76, 94 of the upper and lower shafts 40, 42 (FIGS. 3-4, 7, and 12), the assembly 44 may include a torsion member or bar 130, a sleeve 132 sized to receive the torsion bar 130, and one or more annular or ring bearings 134 sized to receive the sleeve 132. In at least one embodiment, the torsion bar 130 has a cylindrical end region 138 coupled to another cylindrical end region 140 with a reduced diameter central region 142 therebetween. Each of the end regions 138, 140 may have a passage 142, 144 therethrough so that when the assembly 44 is located within the cavities 76, 94 of the upper and lower shafts 40, 42, the passages 142, 144 may be aligned with the respective passages 86, 106 of the shafts so that fasteners 146, 148 may pin each end region 138, 140 to each respective shaft 40, 42. In this manner, the torsion bar 130 can be fixed at its ends 138, 140 to shafts 40, 42, respectively, and as will be explained more below, may resist relative rotation between the shafts, angularly twist under sufficient load, and facilitate measurement of a steering input torque.

The sleeve 132 of the torsion assembly 44 may be tubular and sized to be received over the torsion bar end regions 138, 140 and within the cavities 76, 94. In one embodiment, an axial length of the sleeve 132 may be less than an axial length of the torsion bar 130 so that, when the bar 130 is located within the sleeve 132, the passages 142, 144 of the torsion bar 130 are located without the sleeve 132. In the implementation shown, the sleeve 132 is received within the counterbore 82, 102 of each cavity 76, 94. And in at least one embodiment, the sleeve is press-fit within at least one of the counterbores 82, 102, as will be explained more below. The sleeve 132 may promote coaxial alignment between the upper and lower shafts 40, 42 and, in some instances, may minimize additional slop or play which might otherwise exist between the keys A, B and keyways C, D (e.g., particularly if shafts 40, 42 were to become axially misaligned).

Bearings 134 may be any suitable bearing assemblies sized to fit within the counterbore 102 of the lower shaft 42. For example, in the illustrated embodiment, the bearings 134 are needle roller bearings; however, this is merely an example.

To measure steering input angle and torque, at least some components of steering input sensor 32 (components of which are shown in FIGS. 3-4 and 6-9) are mounted on or associated with the upper and lower shafts 40, 42. For example, sensor 32 includes one or more gears associated with upper shaft 40, one or more gears associated with lower shaft 42, and sensors responsive to rotation of the upper and lower shafts 40, 42. In at least one embodiment, sensor 32 includes a housing 160 having a cover 162, a circuit card 164, a driving or primary gear 170 carried by the upper shaft 40, a driving or primary gear 172 carried by the lower shaft 42, and two driven or secondary gear assemblies 174, 176 carried by the housing 160. As will be explained more below, a gear 180 of the secondary assembly 174 can be used to obtain a steering input measurement while engaged with primary gear 170, and a gear 182 of the other secondary assembly 176 can be used to obtain another steering input measurement while engaged with primary gear 172.

The housing 160 may include a plurality of walls 190 and a base 192 that define a cavity 194 sized to accommodate gears 170, 172, 180, 182 and a portion of the shaft assembly 30. As shown in FIG. 7, the base 192 may have a flanged central aperture 196 sized to receive the lower shaft 42. In at least one implementation, the housing 160 includes an integral carrier 198 that includes a through-hole 200, which as will be described below, may be adapted to carry secondary gear assembly 176. In addition, the housing 160 includes any suitable mounting holes, appurtenances, etc. for receiving and/or retaining other steering input sensor components (e.g., the circuit card 164, the other secondary gear assembly 174, etc.), as described more below.

At an end opposite the base 192, the walls 190 define an opening 202 which receives cover 162. The cover 162 may have a flanged central opening 204 coaxially aligned with aperture 196 in the base 192 so that the upper shaft 40 may couple coaxially with the lower shaft 42 while also protruding from the opening 202 in the cover 162. The housing 160, cover 162, a seal 206 located proximate the flanged opening 204 which circumferentially contacts the outer surface 56 of shaft 40 may inhibit foreign particles such as dust, debris, etc. from interfering with the operation of the gears 170, 172, 180, 182.

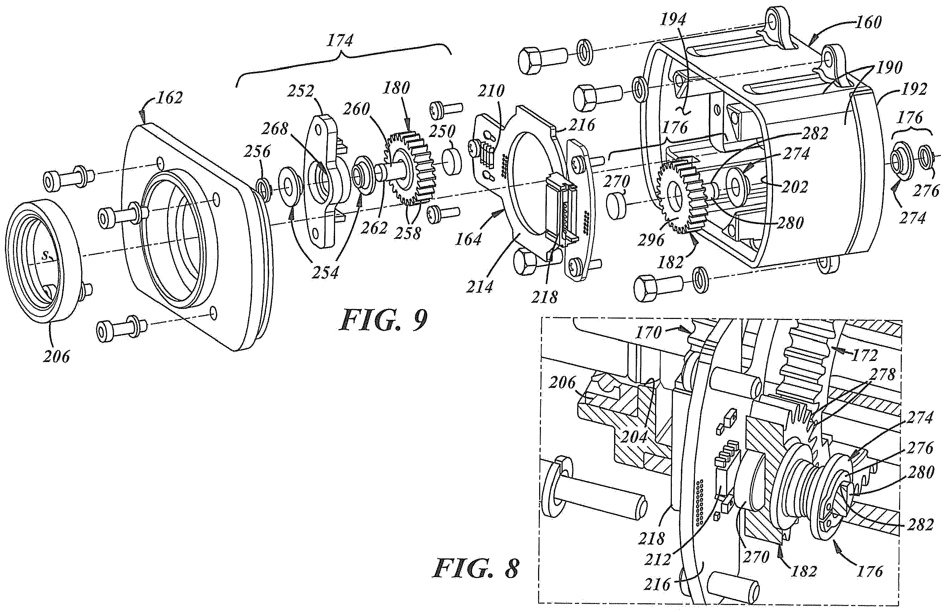

As shown in FIG. 7, the circuit card 164 may be sized and shaped to fit within the cavity 194 of the housing 160 and may carry two sensing elements 210, 212 located on opposite sides 214, 216 of the card 164. In one embodiment, sensing element 210 may be located on the upper side 214 of the card 164-e.g., facing the first end 52 of upper shaft 40, and sensing element 212 may be located on the lower side 214-e.g., facing the second end 92 of lower shaft 42. In addition as shown in FIGS. 8-9, card 164 may be located between gear set 170, 180 associated with the upper shaft 40 and gear set 172, 182 associated with the lower shaft; e.g., the card 164 may be generally perpendicular to axis *S* with side 214 facing the upper gear set 170, 180 and with side 216 facing the lower gear set 172, 182. Circuit card 164 also may include any suitable embedded or integrated circuitry (not shown)-e.g., to couple the sensing elements 210, 212 to ECU 28 via circuit card connector 218.

In at least one embodiment, the circuit card 164 which carries the sensing elements 210, 212 may have an aperture therethrough sized to allow rotation of the shaft assembly 30 without interference with the card 164. Card 164 also may include any suitable fasteners and mounting holes or features for retaining the card 164 within the housing 160.

In the illustrated embodiment, the sensing elements 210, 212 are Hall Effect sensors; however, other implementations are possible (e.g., other sensors which may sense using magnetism, electro-magnetism, light, light reflection, etc.). In one implementation, each Hall sensor 210, 212 is a single-turn sensor; i.e., each sensor provides a unique electrical output for relative rotation between the sensor (210 or 212) and a magnetic field about the sensor throughout a turn or range of 0 to 360 degrees.

As shown in FIG. 3, upper primary gear 170 of the steering input sensor 32 may be carried by the upper shaft 40 and may have an annular-shape with a plurality of teeth 222 extending radially outwardly of a periphery. The gear 170 may have features that correspond with gear retaining features 54 (of upper shaft 40). For example, gear 170 may have an inner surface 226 with a number of gaps or voids 228 sized to receive the tabs 66 of the upper shaft 40 when the gear 170 is positioned against the shoulder 70. In at least the illustrated embodiment, the gear 170 may be held in this position with an annular clip 230 adapted fit within the circumferential channel 68 of the upper shaft 40; e.g., so that the gear 170 rotates with and not relative to shaft 40. Of course, these corresponding features are merely one example; and any suitable features may be used to fix gear 170 against relative rotation with respect to shaft 40 in other embodiments.

As best shown in FIG. 3, lower primary gear 172 of sensor 32 may be carried by the lower shaft 42 and may have corresponding features similar to those of the upper primary gear (e.g., gear 172 may have teeth 232, an inner surface 236, gaps or voids 238, etc.); e.g., so that the gear 172 rotates with and not relative to shaft 42. Thus, in at least the illustrated embodiment, gear 172 may be positioned against flange 112 while tabs 114 of lower shaft 42 are received within the voids 238, and gear 172 may be held in this position with an annular clip 240 located in the circumferential channel 116. These features are merely exemplary as well; thus, it should be appreciated that any suitable features or means may be employed to fix gear 172 against relative rotation with respect to shaft 42. In at least one embodiment, the size or diameter of gear 172 is greater than primary gear 170.

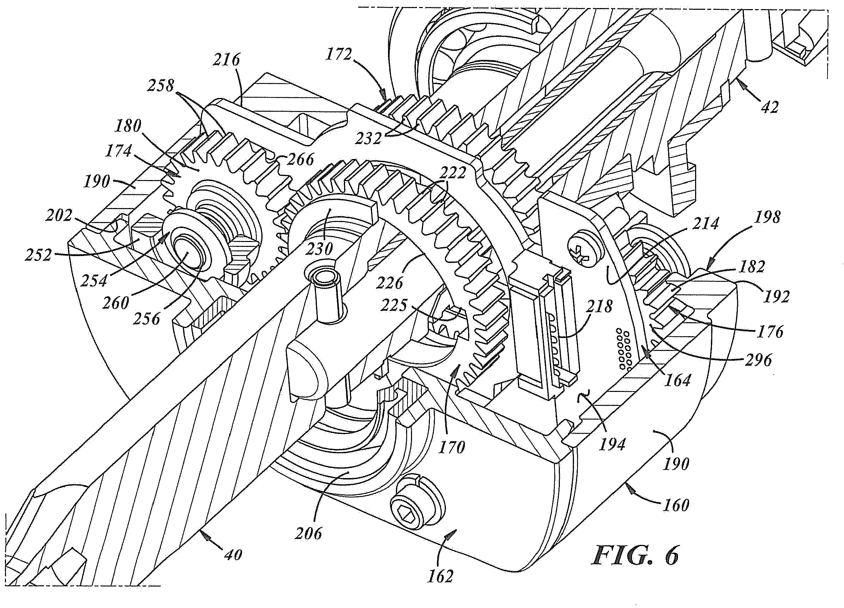

As shown in FIGS. 6 and 9, the upper secondary gear assembly 174 includes the secondary gear 180 engaged with primary gear 170, a sensed element 250 carried by gear 180, a carrier or bracket 252 for positioning the gear 180 within the housing 160, one or more bushings 254, and a clip 256. The gear 180 may be disk-shaped having a plurality of radially outwardly extending teeth 258 meshed with primary gear teeth 222 and may include a central axle 260 extending from one side. The axle 260 may include a circumferential channel 262 near a distal end adapted to receive clip 256.

The sensed element 250 may be surface-mounted, at least partially embedded within, or otherwise fixed to the gear 180. In at least one embodiment, sensed element 250 is a diametric magnet oriented coaxially with respect to axle 260. This is merely an example; other implementations are possible (e.g., including other elements which may be sensed using magnetism, electro-magnetism, light, light reflection, etc.).

The bracket 252 may be mounted to an interior surface of the housing wall 190 and includes a through-hole 268 adapted to receive bushings 254 on either side. When the axle 260 is located through the bushings 254 and through-hole 268, the gear 180 may be retained within the bracket 252 by the clip 256 received in the circumferential channel 262. The shape of the bracket 252 and mounting features thereof are adapted to position the secondary gear assembly 174 in the housing 160 so that the teeth 222, 258 of gears 170, 180 are intermeshed and so that the sensed element 250 is in a desired location relative to the Hall effect sensor 210 on the upper surface 214 of the circuit card 164. In this manner, rotation of the gear 180 (and therefore magnet 250) will change the properties or characteristics of the magnetic field detected or sensed by sensor 210.

As best shown in FIGS. 7-8, the lower secondary gear assembly 176 includes the gear 182 engaged with gear 172, a sensed element 270 carried by gear 182, one or more bushings 274, and an annular clip 276. In at least one implementation, some components of the lower assembly 176-as well as their arrangement and assembly-may be the similar to those of the upper assembly 174; therefore, some components will not be re-described here, such as the gear 182 (having teeth 278, an axle 280, a circumferential channel 282, etc.), the sensed element 270 (fixed or otherwise carried on side 296 of gear 182), the bushings 274, and the clip 276. The lower gear assembly 176 may be assembled within the integral carrier 198 in the housing's base 192-e.g., using the bushings 274, gear axle 280, and clip 276. When assembled, the teeth 232, 278 of gears 172, 182 are intermeshed and sensed element 270 is in a desired location relative to the Hall effect sensor 212 on the lower side 216 of the circuit card 164. Thus, rotation of the gear 182 (and therefore magnet 270) will change the properties or characteristics of the magnetic field detected or sensed by the sensor 212.

When shaft assembly 30 (and primary gears 170, 172) rotates clockwise (CW), the secondary gears 180, 182 rotate counter-clockwise (CCW)-and vice-versa. And as the secondary gears 180, 182 rotate, changes in the magnetic field are sensed by the Hall effect sensors 210, 212 and the sensors 210, 212 correspondingly provide electrical output data representative of at least certain magnetic field characteristics. This output data can be provided to the ECU 28 to determine various steering input position and torque information, as will be described in greater detail below.

It should be appreciated that each set of gears (e.g., gear set 170, 180 and gear set 172, 182) may have different gear ratios. For example, in at least one embodiment, the gear ratio of gear set 170, 180 may be approximately 1:1.71, while the gear ratio of gear set 172, 182 may be approximately 1:2. In the illustrated implementation, primary gear 172 is larger than primary gear 170; however, these and other suitable gear ratios may be achieved in different manners as well. In addition, in other embodiments, other suitable ratios may be used (including, e.g., gear ratios derived from gear 170 being larger than gear 172).

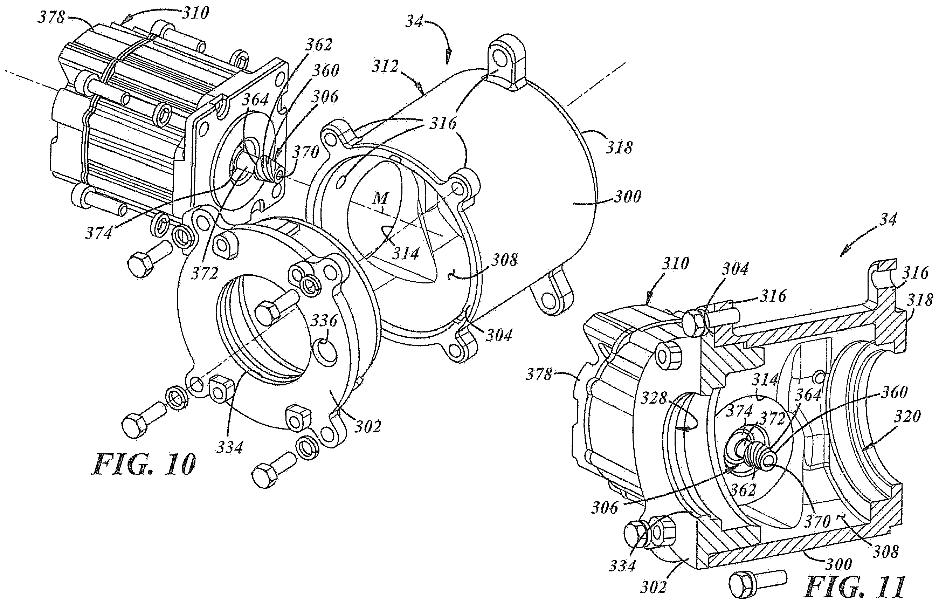

Turning now to the motorized feedback assembly 34 shown in FIGS. 2 and 10-12, the assembly 34 may include a cylindrically-shaped housing 300, an annular cover 302 adapted to be received within one end 304 of the housing 300, a gear system 306 located within a cavity 308 of the housing 300, and a motor assembly 310 adapted to be coupled to a side 312 of the housing 300 at a side aperture 314 thereof along a motor axis M (shown in FIG. 10). The housing 300 may have any suitable mounting features 316 for coupling the motor assembly 310, the clutch assembly 36, and/or the steering input sensor 32. Near one end 318 of the housing 300 (opposite the cover 302), the housing may have any suitable features 320 to accommodate the shaft assembly 30 or various shaft components (e.g., including a shaft opening and an in-board circumferential flange sized and shaped to receive annular bearings 326 (bearings shown in FIG. 3)).

Similarly, the cover 302 may have any suitable features 328 for shaft components (e.g., another inwardly-facing flange sized to receive annular bearings 332) (bearings shown in FIGS. 2-3). Bearings 326, 332 may be carried by the lower shaft 42 and may space the shaft from the interior walls of housing 300. The cover 302 may have a hole 334 large enough for the lower shaft 42 to pass therethrough without interference and may be coaxially aligned with the flanged aperture 196 of the steering input sensor housing 160. As shown in FIGS. 7 and 10, the cover 302 may have a circular depression 336 sized and positioned to avoid interference with some components of the secondary gear assembly 176 which may protrude from the base 192 of the housing 160; however, this is not required in all embodiments.

Within the housing 300, the gear system 306 may include an annular driven gear 340 carried by the lower shaft 42 (FIG. 3). One face 342 of gear 340 may have any suitable number of axially extending teeth 344 which extend radially outwardly from a gear center (e.g., coincident with axis *S*). In at least one embodiment, the teeth 344 spiral radially outwardly-e.g., the gear 340 may be an annular bevel gear or a hypoid gear. In addition, a flanged opening 346 of gear 340 may have one or more radially inwardly extending protrusions 348 received within the axially extending groove(s) 124 on the lower shaft 42. And a retaining clip 350 within circumferential channel 126 may retain the gear 340 adjacent to shoulder 128. In this manner, gear 340 may be fixed against relative rotation with respect to shaft 42; of course, in other embodiments, gear 340 may be fixed against relative rotation in other ways.

Gear system 306 further may include a pinion gear 360 (FIGS. 10-11), engaged with the annular gear 340, that is carried by the motor assembly 310 along axis M, as described below. Gear 360 may have a frustoconical shape, and on an outer surface 362 thereof, may have any suitable number of axially extending teeth 364 (with respect to axis *M*), and the teeth 364 may be adapted to mesh with teeth 344. In at least one embodiment, pinion gear teeth 364 also axially spiral about the outer surface 362-e.g., gear 360 may be a bevel gear or a hypoid pinion gear, just to name a couple non-limiting examples.

As shown in FIGS. 10-11, the pinion gear 360 is carried by a distal end 370 of a shaft 372 rotatably actuated by a motor 374 of the motor assembly 310. The motor 374 is carried by a motor housing 378 which is coupled to side 312 of housing 300; e.g., the motor assembly 310 may be configured so that when the housings 300, 378 are coupled, the teeth 364 of the pinion gear 360 mesh with the teeth 344 of the annular gear 340. The motor 374 may provide a rotational assistance/resistance profile to shaft assembly 30 via gears 340, 360 to provide a force assisting or inhibiting rotation of the steering wheel 38. The motor 374 may provide such a profile using electrical control signals provided from the ECU 28, the controller 20, or both-and the profile may provide the driver with positive feedback consistent non-steer-by-wire systems (e.g., imitating so called 'road-feel.'). Non-limiting examples of motor 374 include an electric brush motor with brushes, a brushless electric motor, etc.

In at least one embodiment, gear system 306 is part of a hypoid gear system-e.g., the teeth 344, 346 of both respective gears 340, 360 have spiraling features, and as best shown in FIG. 12, the axes S and *M* do not intersect. In this manner, gear system efficiency may be improved-e.g., given the same mechanical output power (from motor assembly 310), gears 340, 360 may apply more torque to the lower shaft 42 than conventional gear systems or the like. In addition, hypoid gear systems may provide quieter and/or smoother engagement. Of course, a hypoid system 306 is merely one embodiment; other gear systems-including bevel gear systems-may be used instead.

Turning now to the clutch assembly 36 shown in FIG. 2, the assembly 36 includes any suitable device adapted to selectively inhibit rotation of the shaft assembly 30-e.g., to provide rotational limits or end stops. For example, clutch assembly 36 may lock or apply a brake to the lower shaft 42, or perform any similar operation to inhibit rotation thereof. Locking, braking, etc. may be actuated electrically (e.g., using ECU 28, controller 20, or both). In one non-limiting example, an end stop may be provided at approximately 1.6 steering wheel turns clockwise of center (e.g., approximately 550-600°), and another end stop may be provided at approximately 1.6 steering wheel turns counter-clockwise of center. In at least one embodiment, clutch components may be selectively actuated to inhibit lower shaft 42 rotation at the end stops, or any other suitable angular position(s).

Assembly of the steer-by-wire assembly 12 may be initiated by positioning the annular gear 340 against shoulder 128 and securing the gear 340 with clip 350. Thereafter, annular bearings 326, 332 may be located on the lower shaft 42.

The torsion assembly 44 then may be located within the cavity 94 of the lower shaft 42 so that the end 140 of the torsion bar 130 is within bore 100 and the sleeve 132 and needle bearings 134 are located within the counterbore 102. Fastener 148 may be located through aligned lower shaft and bar passages 106, 144 retaining or fixing the orientation of the bar 130 with respect to the lower shaft 42. In one non-limiting example, the fastener 148 may be a press-fit pin; however, other implementations are possible.

The lower shaft 42, gear 340, and bearings 326, 332 may be located within feedback assembly housing 300 and the motor assembly 310 may be coupled to the housing 300 thereby intermeshing the gears 340, 360. The cover 302 may be located over the first end 90 of the lower shaft 42 at end 304 of the housing 300, and clutch assembly 36 may be coupled to the end 318 of housing 300, to the lower shaft 42, or both. With shaft end 90 (and torsion assembly 44) protruding from the hole 334 of cover 302, the lower primary gear 172 may be retained using gear retaining features 108 including clip 240.

Before coupling the steering input sensor housing 160 to the feedback assembly housing 300, some components of the steering input sensor 32 first may be assembled. For example, secondary gear assembly 176 may be coupled to the integral carrier 198 of housing 160. Then, the first end 90 of the lower shaft 42 may be positioned through the central aperture 196 of housing 160 thereby intermeshing the teeth 232, 278 of gears 172, 182.

The circuit card 164 then may be fastened or otherwise secured within the housing 160 thereby spacing the Hall effect sensor 212 proximate to the magnet 270 carried by gear 182. Then, the upper secondary gear assembly 174 may be coupled to the housing 160 using bracket 252 so that Hall effect sensor 210 (on the upper side 214 of card 164) is spaced proximate to magnet 250 carried by secondary gear 180.

Prior to coupling the upper and lower shafts 40, 42 to one another, primary gear 170 may be coupled to gear retaining features 54 of the upper shaft 40 (e.g., including being secured in place using clip 230). Thereafter, the upper and lower shafts 40, 42 may be coupled. This coupling may include intermeshing primary gear teeth 222 with secondary gear teeth 258 while respectively locating keys A and keyways C of upper shaft 40 into keyways D and keys B of the lower shaft 42. The coupling of upper and lower shafts 40, 42 also may include receiving the torsion assembly 44 into cavity 76 (of the upper shaft 40) and fixing the torsion bar end 142 relative to the upper shaft 40 using fastener 146 (e.g., placing fastener 146 through upper shaft and bar passages 86, 142). In at least one implementation, the sleeve 132 is press-fit into cavity 76 (upper shaft 40)-which, in operation, may provide additional strength to the assembly 12 when an axial force is applied (e.g., to the steering wheel 38).

In at least one embodiment, the upper and lower shafts 40, 42 may rotate relative to one another by a predetermined amount (e.g., 6 degrees). In at least one implementation, the fasteners 146, 148 in the torsion bar 130 center the keys A, B within the respective keyways C, D in an untwisted state-e.g., so that the upper shaft 40 may move relative to the lower shaft 42 approximately +/- 3 degrees. Thus, when the upper shaft 40 rotates relative to the lower shaft 42, the torsion bar 130 twists, but twisting and relative rotation of the shafts 40, 42 is limited by the interference of the keys A, B, as previously described. Clockwise twisting so that keys A and B are engaged may be associated with a predetermined torque value of the torsion bar 130 (e.g., approximately 6 Newton meters (Nm)); similarly, counterclockwise twisting so that keys A and B are engaged may be associated with a similar predetermined torque value of the torsion bar 130 (e.g., 6 Nm). Of course, less clockwise or counterclockwise twisting (e.g., less than +/- 3 degrees) may be associated with correspondingly smaller torque values of torsion bar 130.

To complete the assembly, the cover 162 and seal 206 may be positioned over upper shaft 40 and the cover 162 may be coupled to the housing 160 using fasteners or the like. The steering wheel 38 may be coupled to assembly 12 before, during, or after steer-by-wire assembly 12 is mounted in a vehicle. In some embodiments, the ECU 28 may be mechanically coupled to some portion of assembly 12; and in at least one embodiment, the ECU 28 may be part of steering input sensor 32. In any case, ECU 28 may be electrically coupled to circuit card 164 as well as steering mechanism 14.

It should be appreciated that some assembly steps may be conducted in a different order or concurrently. Further, in other steer-by-wire assembly embodiments, some steps may be added, some steps may be omitted, or both.

During operation of the steer-by-wire assembly 12, in general, steering input may be received at the upper shaft 40 over an exemplary angular steering input range of 1200° (e.g., approximately 3.3-360° turns or +/-600° from a centered position). Steering input at the upper shaft 40 rotates the primary gear 170 in unison, thereby driving secondary gear 180. And rotation of gear 180 rotates magnet 250 and changes the magnetic field sensed by Hall effect sensor 210. In response, upper Hall effect sensor 210 provides an electrical output to ECU 28 that corresponds to the angular or rotational orientation or position of gear 180 (i.e., the angular or rotational orientation or position of magnet 250). Similarly, the lower shaft 42 and primary gear 172 rotate in response to rotation of the upper shaft 40-e.g., thereby rotating secondary gear 182 and magnet 270. As a result, lower Hall effect sensor 212 may provide electrical output to ECU 28 depending on the angular or rotational orientation or position of gear 182 (i.e., the angular or rotational orientation or position of magnet 270). The ECU 28 then determines steering position data and steering torque data using the electrical output data of upper and lower sensors 210, 212.

More specifically, the ECU 28 determines position and torque data using only two sensors (e.g., 210, 212) and two gear sets (e.g., 170, 180 and 172, 182), whereas conventional systems use three sensors and three gear sets to determine both position and torque data. For example, in conventional systems, a first sensor / first gear set (having a gear ratio GR1) is coupled via a rigid body to a second sensor / second gear set (gear ratio = GR2, where GR1 ≠ GR2). Also further, a third sensor / third gear set (wherein gear ratio = GR2) is coupled to the second sensor / second gear set via a torsion bar. In such conventional systems, position data is determined using data sensed via the first and second gear sets, and torque data is determined using data sensed via the second and third gear sets. As described above, assembly 12 uses only two gear sets, each having a different gear ratio (e.g., GR_{170,180} ≠ GR_{172,182}), to determine both steering position and torque data. In addition, in assembly 12, the gear sets 170, 180 and 172, 182 are not coupled via a rigid body, but instead torsion bar 130. Thus, it should be appreciated that when the torque is at or below a threshold that is sufficient to twist the torsion bar 130, the the torsion bar 130 behaves as a rigid body and the primary gears 170, 172 rotate in phase with one another (e.g., in this scenario, the torsion bar 130 is in an untwisted state). And when torque above the threshold is being applied, rotation of the primary gears 170, 172 is out-of-phase with one another (e.g., torsion bar 130 is in a twisted state). As will be explained more below, the untwisted state serves as a baseline when the ECU 28 determines position and torque data-e.g., when any two measurements are received at ECU 28 from sensors 210, 212, initially the ECU 28 may be unable to differentiate whether the torsion bar 130 is in the twisted or untwisted state until executing the method described below.

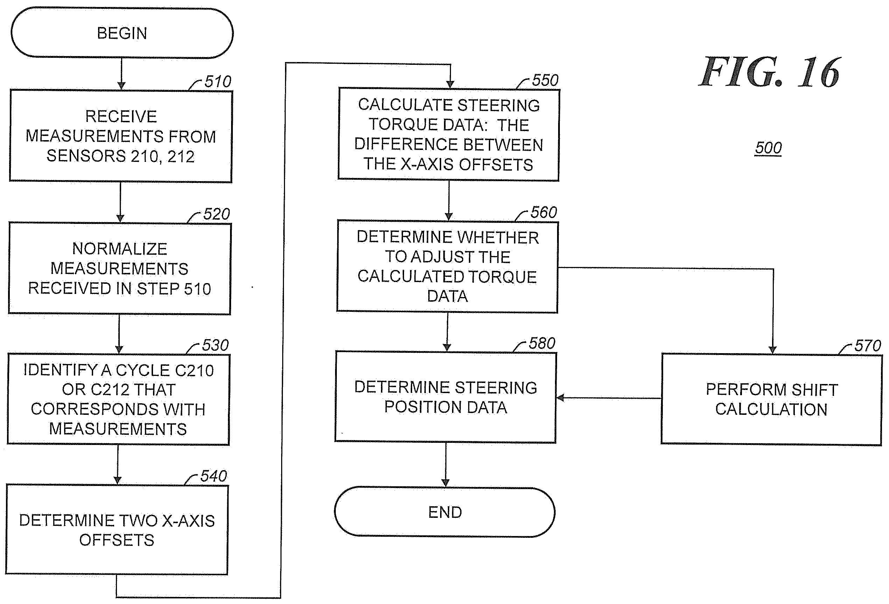

Method 500 shown in FIG. 16 illustrates a process that may be carried out by the ECU 28 to determine steering position and torque data based on the electrical outputs of sensors 210, 212. The method begins with step 510 that includes the ECU 28 receiving measured electrical values from Hall effect sensors 210, 212 (e.g., a pair of measurements S_{210(MEAS)}, S_{212(MEAS)}). It will be appreciated that the method 500 describes determining position and torque data with respect to a single pair of measurements; however, the ECU 28 may receive continuously updated or new pairs of measurements (which may be the same or different than the previous pair), continuously determine steering wheel position and torque data based on the latest pair of measurements, and repeatedly send position and torque data to the steering mechanism 14 based on the determination.

Since upper and lower sensors 210, 212 may be single-turn devices (as explained above), the electrical values S_{210(MEAS)}, S_{212(MEAS)} may be measured electrical characteristics (e.g., voltages, currents, etc.) that are representative of respective angular measurements between 0° and 360° (herein, for sake of clarity, exemplary measurements are expressed only in terms of degrees instead of, e.g., a voltage). According to one example, ECU 28 could receive a 0.09° measurement from upper sensor 210 (S_{210(MEAs)}) and a 234° measurement from lower sensor 212 (S_{212(MEAS)}); this pair (0.09°, 234°) will be used to illustrate an ECU determination of position and torque steering data according to one exemplary scenario. For purposes of calculation, one of the sensor measurements S_{210(MEAS)}, S_{212(MEAS)} will be considered a reference sensor output. The method discussed herein considers the lower sensor 212 to be the reference sensor; however, this is not required (e.g., in other embodiments, the upper sensor 210 could be the reference sensor instead).

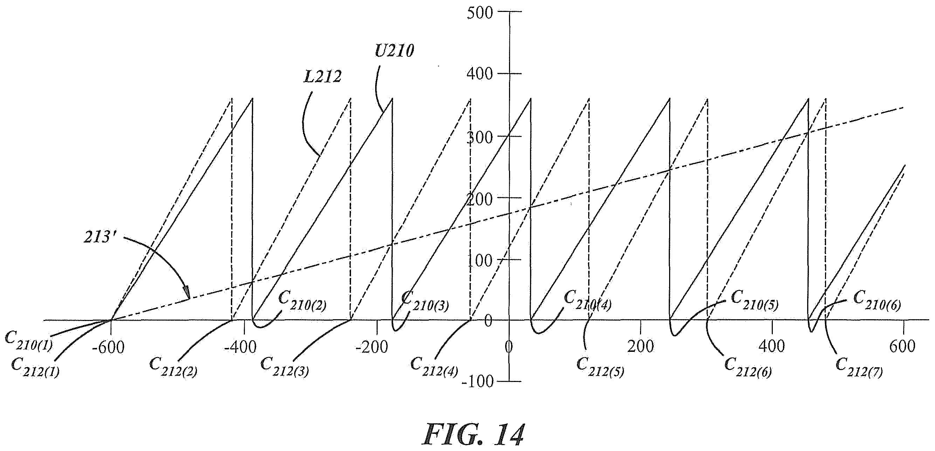

In at least one embodiment, in step 520 (which follows), ECU 28 may normalize the measurements (e.g., 0.09°, 234°) prior to performing additional calculations. As used herein, a normalization or normalizing calculation executed by ECU 28 includes using a mathematical function that correlates values of the desired steering wheel range (e.g., in this case, 1200°) with values less than or equal to a single turn of a Hall effect sensor (e.g., 0° - 360°). In at least one embodiment, this is a linear relationship (e.g., see curve 213' of FIG. 14, described more below). As shown, y-axis values 0° to 348° of curve 213' correspond to steering wheel x-axis values of the exemplary steering wheel range of -600° to +600°. In this implementation, normalization having a maximum y-value of 348° (e.g., instead of 360°) is due to the particular normalization criteria-e.g., the specific steering wheel range (1200°) and the specific gear ratios (GR_{170,180} = 1.71 and GR_{172,182} = 2.00), as well as the criteria that the difference of any pair of sensor values (in the untwisted state) should correlate to a single steering range value, as explained more below. Thus, in other implementations, the maximum y-value could be less than or greater than 348°, but for example, do not exceed 360°.

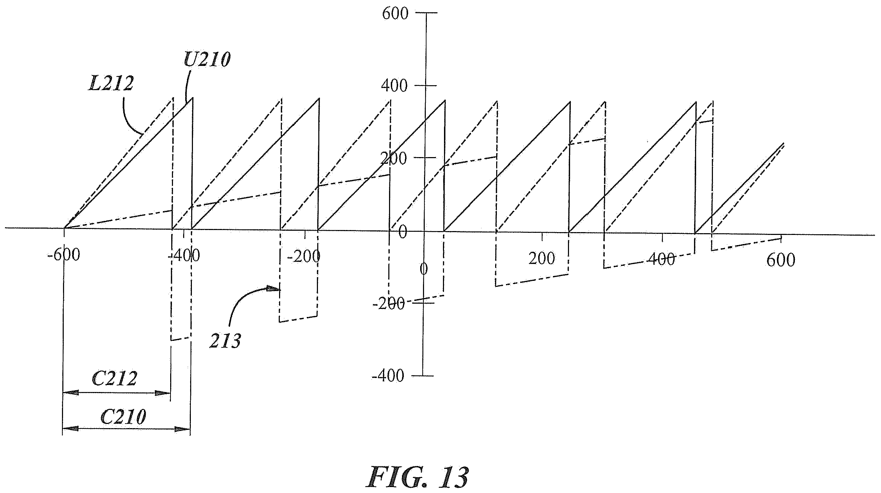

More particularly, FIGS. 13-14 (which will be referred to more below) depict a first sawtooth waveform (U210) associated with values of the upper sensor 210-e.g., illustrating cyclical rotations of secondary gear 180 and magnet 250 as detected by sensor 210. In this implementation, sensor 210 senses rotation of magnet 250 more than five times (or more than five cycles C210) over the 1200° range. FIGS. 13-14 also depict a second sawtooth waveform (L212) associated with values of the lower sensor 212-e.g., illustrating cyclical rotations of secondary gear 182 and magnet 270 as detected by sensor 212. In this implementation, sensor 212 senses rotation of magnet 270 more than six times (or more than six cycles C212) over the 1200° range. It should be appreciated that the corresponding angular measurements of cycles C210, C212 (e.g., depicted along the x-axis) are determinable using the respective gear ratio. For example, the first cycle C210 extends between -600° and -389.47° (or -600° + 360°/1.71), the second cycle extends between -389.47° and -178.95° (or -389.47° + 360°/1.71), etc.

FIG. 13 also illustrates a normalization curve 213-determinable by subtracting y-values of waveform U210 from corresponding y-values of waveform L212. The exemplary curve 213 extends along the x-axis from -600° to 600° and along the y-axis between -308° to 348°. And FIG. 14 illustrates a linear normalization curve 213'-wherein, whenever the difference or calculated y-value of curve 213 is less than 0° (i.e., a negative value), 360° is added to the difference-e.g., so that all values of curve 213' result in a y-value of 0° to 348° (and hence a straight line).

It should be appreciated that normalization curve 213' may have a non-zero slope-e.g., because the respective gear ratios GR_{170,180} and GR_{172,182} differ (e.g., if GR_{170,180} = GR_{172,182}, the slope of curve 213' would be zero-and all y-values would be the same for any given x-value). In at least one embodiment, it is the non-zero slope that facilitates baseline sensor pairs corresponding to only one single steering range value (of course, in the untwisted state). For example, in the illustrated embodiment, when sensor 210 outputs 302.67° and sensor 212 outputs 354° (without applied torque), then according to the normalization curve 213', the steering wheel range equals -423°. Of course, sensor 210 could output 302.67° in five different cycles C210 along the steering wheel range between -600° and 600°; however, it outputs 302.67° only once when sensor 212 also outputs 354°.

Also, it should be appreciated that the illustrated normalization curves 213, 213' include a shift so that 0° (y-axis) corresponds with -600° (x-axis); however, this is not required. For example, instead 0° (y-axis) could correspond with 0° (x-axis) or the like-hence, this shift is used for explanatory purposes only.

Returning to step 520, thus ECU 28 may calculate normalized values S_{210(NORM)}, S_{212(NORM)} for each of the measured values (e.g., S_{210(MEAS)} = 0.09°, S_{212(MEAS)} = 234°). For example, 0.09° (upper sensor value) may be converted to 306.09° (S_{210(NORM)}) and 234° (lower sensor value) may be converted to 354° (S_{212(NORM)}). Since the ECU 28 does not know whether the torsion bar 130 is twisted, the ECU 28 does not assume that the S_{210(NORM)}, S_{212(NORM)} values (e.g., 306.09°, 354°) correspond to a single steering wheel position between -600° and 600°. While method 500 is described with respect to ECU 28 performing normalization calculations, it should be appreciated that a lookup table (e.g., in memory 37) could be used instead. For example, normalization calculations could be used to pre-configure lookup table values, and then the values may be stored prior to operation of assembly 12. Other implementations of step 520 also may exist.

In step 530 which follows, the ECU 28 may identify a cycle C210 or C212 that corresponds with the normalized values S_{210(NORM)}, S_{212(NORM)}. In this manner, the ECU 28 may determine an approximate steering wheel position-e.g., identifying an approximate location along curve 213'. For example, once the appropriate cycle C210 is identified, this information will be used by ECU 28 in calculations described below. Step 530 may include ECU 28 calculating a difference of the normalized values; e.g., 354° - 306.09° = 47.91° (a y-value of curve 213'). For example, in curve 213', y-value 47.91° corresponds with an x-axis value of -434.79°, and -434.79° can be correlated to the first of five cycles C210 (the first cycle being counted from x-axis value -600°). Of course, when the calculated difference is larger between two normalized measured sensor outputs, ECU 28 instead may identify a different cycle C210-e.g., the second cycle, the third cycle, etc.

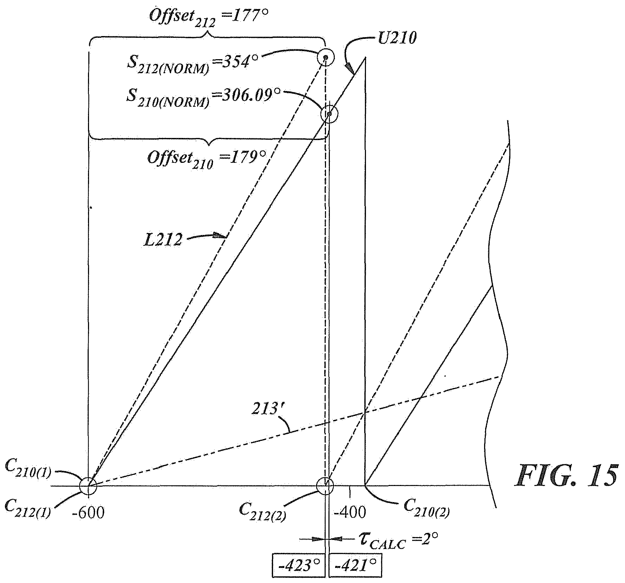

In step 540 which follows, two x-axis offsets (offset₂₁₀ and offset₂₁₂) may be determined using the normalized values of step 520 (e.g., S_{210(NORM)} = 306.09°, S_{212(NORM)} = 354°) and the respectively determined cycle C210 in step 530 (e.g., in this instance, the first cycle C210). As will be described below, offset₂₁₀ and offset₂₁₂ will be used to calculate torque and position data. Offset₂₁₀ may be a difference between a cycle beginning point C₂₁₀₍₁₎ and an x-value along steering range +/-600° that corresponds with y-value S_{210(NORM)}. And offset₂₁₂ may be a difference between the cycle beginning point C₂₁₂₍₁₎ and an x-value that corresponds with y-value S_{212(NORM)}. (Of course, C₂₁₀₍₁₎ = C₂₁₂₍₁₎ in this instance; however, the beginning points of each cycle C210, C212 are not equal elsewhere since GR_{170,180} ≠ GR_{172,182}.) For example, as shown in FIG. 15, C₂₁₀₍₁₎ is located at -600° and S_{210(NORM)} = 306.09°. The x-value along steering range +/-600° that corresponds with S_{210(NORM)} is -421°. Therefore, offset₂₁₀ = -421° - (-600°) = 179°. Offset₂₁₂ can be calculated similarly: S_{212(NORM)} = 354° and corresponds to an x-value along steering range +/-600° of-423°; thus, offset₂₁₂ = -423° - (-600°) = 177°.

Next in step 550, the ECU 28 determines the steering torque data (τ_{CALC})-e.g., a measure of how much torsion bar 130 is twisted. In at least one embodiment, the ECU 28 determines this torque data by calculating the difference between the two offsets-e.g., τ_{CALC} = offset(upper) - offset(lower) or in the instance example, τ_{CALC} = 179° - (177°) = +2° (e.g., the positive sign indicating a clockwise direction). Here, torque is expressed as an angular measurement for sake of clarity (e.g., it should be appreciated that the angular measurement may be converted to Newton-meters, foot-lbs, or like value in accordance with the characteristics of the torsion bar 130). Other values and/or directions may be calculated which are greater or lesser than 2°. And of course, if the calculated torque data (τ_{CALC}) is zero, then no torque is being applied.

In step 560, the ECU 28 may determine whether to adjust the calculated torque data (τ_{CALC}). For example, the ECU 28 may determine whether the calculated torque (τ_{CALC}) is a reasonable value-e.g., a value between -3° and +3°. Recall that in the illustrated embodiment, the keys A, B only permit six degrees of rotation (e.g., +/- 3°). Thus, if the calculated torque data (τ_{CALC}) is outside of those bounds, then an adjustment or shift calculation may be necessary (and the method proceeds to step 570 and then step 580). If the calculated torque data (τ_{CALC}) is within the reasonable range, then the method proceeds directly to step 580. In the present example, since - 3° ≤ 2° ≤ +3°, calculated torque (τ_{CALC}) equals actual torque (τ_{ACTUAL}) and the method 500 proceeds from step 560 to 580.

In step 580, the ECU 28 determines steering position data (ω) using the non-reference sensor output or the output of sensor 210. Of course, in other embodiments, upper sensor 210 could be the designated reference sensor and step 580 could use the output of sensor 212 instead. Initially in step 580, an adjusted upper sensor value S_{210(ADJ)} is calculated using the actual torque data (τ_{ACTUAL}) and the associated gear ratio GR_{170,180}. More specifically, S_{210(ADJ)} = S_{210(NORM)} - (τ_{ACTUAL} * GR_{170,180}) = 306.09° - (2 * 1.71) = 302.67°. Using the normalization calculation discussed above (step 520), the steering position data (ω) then can be determined using the calculated value of S_{210(ADJ)}, wherein S_{210(ADJ))} is a y-value on line U210 within the cycle determined in step 530 (e.g., in this instance, within the first cycle C210). For example, according to the slope of curve 213', when S_{210(ADJ)} = 302.67°, the corresponding x-value is -423°. Thus, the determined position data (ω) = -423°. Having determined both position data and torque data (e.g., ω= -423°, τ_{ACTUAL} = 2°), the method 500 ends. Of course, the torque and position data (ω, τ_{ACTUAL}) may be transmitted to the steering mechanism 14 so that the vehicle wheels 26 may be actuated accordingly-and this process may be repeated for other sensor values.

Step 570 includes determining and executing one of several shift calculations. For example, the shift calculations may account for one of five different scenarios associated with the cycles C210, C212: (1) when one of the sensor measurements (S_{210(NORM)}, S_{212(NORM)}) falls outside the steering wheel range (e.g., outside of +/- 600°)-e.g., due to applied torque; (2) when the upper sensor measurement (S_{210(NORM)}) crosses to an adjacent cycle C210 in the positive direction (towards +600°); (3) when the upper sensor measurement (S_{210(NORM)}) crosses to an adjacent cycle C210 in the negative direction (towards -600°); (4) when the lower sensor measurement (S_{212(NORM)}) crosses to an adjacent cycle C212 in the positive direction (towards +600°); and (5) when the lower sensor measurement (S_{212(NORM)}) crosses to an adjacent cycle C212 in the negative direction (towards -600°). If any of these circumstances are determined to have occurred, an appropriate shift calculation is applied to determine the actual torque data (τ_{ACTUAL}). According to one embodiment, each of these scenarios may be determined by determining whether the torque data (τ_{CALC}) falls within one of five different calculated torque ranges (e.g., each torque range being associated with one of the five possible scenarios). The specific range values will vary depending on calculation criteria-e.g., criteria such as total steering input range, G_{170,180}, GR_{172,182}, etc. An example of each scenario is provided below.

If the calculated torque data (τ_{CALC}) falls within a first range (e.g., -27° ≤ τ_{CALC} ≤ -24°), then a sensor measurement has fallen outside the steering wheel range-scenario (1) has occurred. ECU 28 then may perform the following shift calculation to determine the actual torque data (τ_{ACTUAL}): τ_{ACTUAL} = [S_{210(NORM)} / GR_{170,180}] - [S_{212(NORM)}/ GR_{172,182}]. Consider the following exemplary sensor output data received at ECU 28: S_{210(MEAS)} = 56.05° and S_{212(MEAS)} = 240° (e.g., received in step 510). Normalization (step 520) yields: S_{210(NORM)}= 2.05° and S_{212(NORM)} = 0°. As a result of steps 530-550, the ECU 28 determines the calculated torque data (τ_{CALC}) to be -26.17°. Since -26.17° falls within the first range, the torque is adjusted using the shift calculation and τ_{ACTUAL} = [2.05°/1.71] - [0°/2.00] = 1.20°. Thereafter, step 580 can be performed as described above to determine that the position data (ω) -600°.

If the calculated torque data (τ_{CALC}) falls within a second range (e.g., 207° ≤ τ_{CALC} ≤ 214°), then an upper sensor measurement has crossed to an adjacent cycle C210 in the positive direction-scenario (2) has occurred. ECU 28 then may perform the following shift calculation to determine the actual torque data (τ_{ACTUAL}): τ_{ACTUAL} = τ_{CALC} - [360° / GR_{170,180}]. Consider the following exemplary sensor output data received at ECU 28: S_{210(MEAS)} = 39.16° and S_{212(MEAS)} = 288° (e.g., received in step 510). Normalization (step 520) yields: S_{210(NORM)} = 345.16° and S_{212(NORM)} = 48°. As a result of steps 530-550, the ECU 28 determines the calculated torque data (τ_{CALC}) to be 208.38°. Since 208.38° falls within the second range, the torque is adjusted using the shift calculation and τ_{ACTUAL} = 208.38° - [360°/1.71] = - 2.15°. Thereafter, step 580 can be performed as described above to determine that the position data (ω) = -396°.

If the calculated torque data (τ_{CALC}) falls within a third range (e.g., -214° ≤ τ_{CALC} ≤ -207°), then an upper sensor measurement has crossed to an adjacent cycle C210 in the negative direction-scenario (3) has occurred. ECU 28 then may perform the following shift calculation to determine the actual torque data (τ_{ACTUAL}): τ_{ACTUAL} = τ_{CALC} + [360° / GR_{170,180}]. Consider the following exemplary sensor output data received at ECU 28: S_{210(MEAS)} = 57.38° and S_{212(MEAS)} = 304° (e.g., received in step 510). Normalization (step 520) yields: S_{210(NORM)} = 3.38° and S_{212(NORM)} = 64°. As a result of steps 530-550, the ECU 28 determines the calculated torque data (τ_{CALC}) to be -210.03°. Since -210.03° falls within the third range, the torque is adjusted using the shift calculation and τ_{ACTUAL} = -210.03° + [360°/1.71] = 0.50°. Thereafter, step 580 can be performed as described above to determine that the position data (ω) = -388°.

If the calculated torque data (τ_{CALC}) falls within a fourth range (e.g., 177° ≤ τ_{CALC} ≤ 183°), then a lower sensor measurement has crossed to an adjacent cycle C212 in the positive direction-scenario (4) has occurred. ECU 28 then may perform the following shift calculation to determine the actual torque data (τ_{ACTUAL}): τ_{ACTUAL} = τ_{CALC} - [360° / GR_{172,182}]. Consider the following exemplary sensor output data received at ECU 28: S_{210(MEAS)} = 6.50° and S_{212(MEAS)} = 244° (e.g., received in step 510). Normalization (step 520) yields: S_{210(NORM)} = 312.50° and S_{212(NORM)} = 4.00°. As a result of steps 530-550, the ECU 28 determines the calculated torque data to be 180.75°. Since 180.75° falls within the fourth range, the torque is adjusted using the shift calculation and τ_{ACTUAL} = 180.75° - [360°/2.00] = 0.75°. Thereafter, step 580 can be performed as described above to determine that the position data (ω) = -418°.

And finally if the calculated torque data falls within a fifth range (e.g., -183° ≤ τ_{CALC} ≤ -177°), then a lower sensor measurement has crossed to an adjacent cycle C212 in the negative direction-scenario (5) has occurred. ECU 28 then may perform the following shift calculation to determine the actual torque data (τ_{ACTUAL}): τ_{ACTUAL} = τ_{CALC} + [360° / GR_{172,182}]. Consider the following exemplary sensor output data received at ECU 28: S_{210(MEAS)} = 253.98° and S_{212(MEAS)} = 238° (e.g., received in step 510). Normalization (step 520) yields: S_{210(NORM)} = 199.98° and S_{212(NORM)} = 358.00°. As a result of steps 530-550, the ECU 28 determines the calculated torque data to be -181.00°. Since -181.00° falls within the fifth range, the torque is adjusted using the shift calculation and τ_{ACTUAL} = -181.00° + [360°/2.00] = -1.00°. Thereafter, step 580 can be performed as described above to determine that the position data (ω) = -61°.

Thus, one of the first through fifth ranges may be used to determine actual torque (τ_{ACTUAL}) when the calculated torque falls outside of a range of keys A, B-e.g., in the present embodiment, when -3° > τ_{CALC} > +3°. Otherwise, the calculated torque equals actual torque (τ_{ACTUAL}). Having determined the actual torque (τ_{ACTUAL}) in steps 550-570 and the position (ω) in step 580, the method 500 ends.

It should be appreciated that other angular steering input ranges could be used instead. For example, an angular steering range of +/- 800° may be used with the same Hall sensors 210, 212 by using different gear ratios-e.g., gear set 170, 180 and/or gear set 172, 182 has a different gear ratio. In at least one embodiment, the normalized waveform may have a different vertical range (e.g., something other than +/- 348°), but still may be between 0° and 360°.

Other aspects of vehicle steering or steering control/response may be employed using the steer-by-wire system 10 as well. For example, the ECU 28, the controller 20, or both may command rotational assistance/resistance in accordance with a determined angular position of the shaft 30. For example, in order to imitate non-steer-by-wire systems, the motor 374 may be actuated in a direction opposite that applied by at the upper shaft 40-e.g., applying a predetermined torque thereto. More specifically, the motor 374 may apply torque to the lower shaft 42 using the gear system 306. This torque may increase as the upper and/or lower shafts 40, 42 approach their rotational limits or end stops (e.g., approaching either -600 or +600 degrees), just as a conventional mechanical system becomes more difficult to turn as the steering system approaches its physical limits.

In another embodiment, the motor may apply rotational assistance/resistance or so-called 'road-feel' in response to torque applied to the upper shaft 40-e.g., applying torque to shaft 42 in a direction of applied torque or in a direction opposing the torque applied to shaft 40 (e.g., in response to the ECU 28 receiving and processing the outputs of the Hall sensors 210, 212). For example, in one embodiment, when a relatively small torque is applied to shaft 40, a small rotational resistance may be applied in the opposing direction, and when a larger torque is applied to shaft 40, then a correspondingly larger rotational resistance is applied in the opposing direction. Of course, this profile need not be linear (e.g., it could be exponential or any other suitable shape). Rotational assistance or resistance applied by motor 374 may prevent steering from becoming unwieldy, thereby assisting a driver in controlling the vehicle.

In at least one embodiment, rotational assistance/resistance applied by motor 374 (and controlled by ECU 28 and/or controller 20) may be sufficient to return the steering wheel 38 to the centered position without driver actuation and with minimal overshoot. In fact, in some embodiments, the ECU 28 and/or controller 20 may be able to determine whether a driver is holding the wheel 38-e.g., by determining upper shaft 40 position in response to attempts by motor 374 to return the upper shaft 40 to the centered position. In at least one embodiment, when it is determined that a driver is not holding the wheel 38, the ECU 28 and/or controller 20 may command the motor 374 to return the upper shaft 40 to the centered position.

It should be appreciated that terms such as upper, lower, above, below, etc. refer to directions in the drawings to which reference is made. These and other like terms are not intended to be limiting, but for explanatory purposes only.

Thus, there has been described a steer-by-wire system for a vehicle that includes a steer-by-wire assembly. The assembly includes a steering input sensor that outputs electrical data associated with relative rotational data of an upper shaft and a lower shaft. In response to receiving this data at an electronic control unit (ECU) or a controller, the ECU or controller is configured to determine steering position and torque data for controlling the vehicle wheels. In addition, the steer-by-wire assembly may include a feedback assembly having a motor capable of providing rotational assistance/resistance to the shaft(s) which may assist a driver in steering and controlling the vehicle.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A steer-by-wire assembly for a steering system in a vehicle, comprising:
a first shaft rotatable in response to a steering input;
a second shaft adapted to rotate in response to rotation of the first shaft;
a first gear that rotates in response to rotation of the first shaft;
a second gear that rotates in response to rotation of the second shaft, wherein each of the first and second gears carry a sensed element;
a first sensing element adapted to sense the element carried by the first gear and provide an output associated with an angular position of the first gear; and
a second sensing element adapted to sense the element carried by the second gear and provide an output associated with an angular position of the second gear, wherein, when the second shaft rotates relative to the first shaft, the outputs provide position and torque data associated with the steering input.

2. The assembly of claim 1, wherein the first and second shafts are coupled to one another via a torsion bar that enables the second shaft to rotate relative to the first shaft.

3. The assembly of any preceding claim, further comprising a first primary gear carried by the first shaft and that does not rotate relative thereto, the first primary gear adapted to rotate the first gear in response to the steering input.

4. The assembly of any preceding claim, further comprising a second primary gear carried by the second shaft and that does not rotate relative thereto, the second primary gear adapted to rotate the second gear in response to the rotation of the first shaft.

5. The assembly of any preceding claim, wherein the first and second sensing elements are Hall Effect sensors, wherein the first and second sensed elements are diametric magnets fixed respectively to the first and second gears.

6. The assembly of any preceding claim, further comprising a housing adapted to carry a circuit card and the first and second gears, wherein the circuit card carries the first sensing element on one side of the circuit card, facing the first gear, and carries the second sensing element on the opposite side of the circuit card, facing the second gear.

7. The assembly of any preceding claim, further comprising an electronic control unit (ECU) coupled to the first and second sensing elements, the ECU being configured to receive the outputs of the first and second sensing elements and, based on the outputs, determine the position and torque data associated with the steering input.

8. The assembly of any preceding claim, further comprising a motorized feedback assembly adapted to, in response to the outputs of the first and second sensing elements, provide a force assisting or inhibiting rotation of the first and second shafts.

9. The assembly of claim 8, wherein the feedback assembly further comprises:
a pinion gear rotated by a motor in response to the outputs of the first and second sensing elements; and
an annular gear carried by the second shaft and driven by the pinion gear.

10. The assembly of claim 9, wherein an axis of the annular gear and an axis of the pinion gear do not intersect.

11. A method of determining steering input position data and torque data for a vehicle steering system, comprising the steps of:
receiving a first electrical output from a first sensing element that detects rotation of a first shaft using a first gear ratio, wherein the first shaft is coupled to a second shaft via a torsion bar;
receiving a second electrical output from a second sensing element that detects rotation of the second shaft using a second gear ratio that is different than the first gear ratio; and
using the first and second gear ratios, determining steering input position data and steering input torque data based on the first and second electrical outputs, wherein in particular the determining step requires receiving sensor data from only the first and second sensing elements.

12. The method of any preceding claim, further comprising determining a two-dimensional (2-D) normalization curve or an equation representing the normalization curve, wherein a slope of the curve is associated with a difference between a first range of electrical values from the first sensing element along a predetermined steering wheel range and a second range of electrical values from the second sensing element along the predetermined steering wheel range, wherein the first range comprises a plurality of cycles output from the first sensing element which correspond a plurality of electrical outputs to a plurality of angular measurements, wherein the second range comprises a plurality of cycles output from the second sensing element which correspond a plurality of electrical outputs to a plurality of angular measurements.

13. The method of claim 12, further comprising:
using the first electrical output, approximating a position within the first range, wherein the approximation identifies one cycle of the plurality of cycles (within the first range); and
using the identified cycle (within the first range), determining steering input position data and steering input torque data.

14. The method of claim 13, further comprising:
using the second electrical output, approximating a position within the second range, wherein the approximation within the second range identifies one cycle of the plurality of cycles (within the second range); and
using the one identified cycle (within the second range), determining steering input position data and steering input torque data.

15. The method of claim 14, further comprising performing a shift calculation to determine the steering input torque data when one of the following occurs: the first or second electrical outputs represents a value outside of the predetermined steering wheel range, the first electrical output represents a value on a cycle adjacent the one identified cycle (within the first range), or the second electrical output represents a value on a cycle adjacent the one identified cycle (within the second range).
